# FASCICULE DE BREVET EUROPEEN

(11) **EP 3 194 818 B1**
(45) Date de publication et mention de la délivrance du brevet: **07.11.2018**
(21) Numéro de dépôt: 15775637.0
(22) Date de dépôt: 15.09.2015
(51) Int. Cl.: F16K 15/14, B63C 11/22, G05D 16/00

(54) **SYSTEME DE RACCORDEMENT COMPORTANT UN DISPOSITIF D'OBTURATION POUR DETENDEUR DE PLONGEE**
VERBINDUNGSSYSTEM MIT EINEM SCHLIESSELEMENT FÜR TAUCHREGLER
CONNECTION SYSTEM COMPRISING A CLOSING DEVICE FOR DIVING REGULATOR

(30) Priorité: 16.09.2014 FR 1458752
(43) Date de publication de la demande: 26.07.2017
(73) Titulaire: R.G. s.a.s. DI ROSARIA GALLI & Co., 16032 Camogli (GE) (IT)
(72) Inventeur: STRADELLA, Fabio, I-16032 Camogli (IT)
(74) Mandataire: CAPRI
(86) Numéro de dépôt international: PCT/EP2015/071096
(87) Numéro de publication internationale: WO 2016/041960

(56) Documents cités:
- EP-A1- 1 334 904
- DE-A1-102009 049 245
- US-A- 2 746 477

## Description

La présente invention concerne un système de raccordement comportant un dispositif d'obturation, notamment pour un réducteur de pression, en particulier un réducteur de pression d'un détendeur de plongée.

Un détendeur de plongée comporte un réducteur de pression fixé à un réservoir d'air comprimé et reliée par l'intermédiaire d'un tuyau souple à une valve sur commande munie d'une interface, tel qu'un embout buccal, pour permettre à l'utilisateur de respirer l'air du détendeur. Le réducteur de pression forme ce qui est habituellement appelé le premier étage et la valve sur commande forme ce qui est généralement appelé le second étage. Lorsque le réducteur de pression n'est pas connecté à une valve d'un réservoir, son entrée d'air est ouverte sur l'environnement externe, et si le réducteur de pression est immergé dans l'eau, de l'eau peut y pénétrer. Cette situation, qui peut souvent se produire (par exemple dans un bateau, où il y a toujours de l'eau sur le fond), pourrait créer de graves problèmes, parce que l'eau, en particulier l'eau de mer, peut entraîner des oxydations et les dépôts de sel pourraient bloquer ou boucher les parties internes et conduits du réducteur de pression. Cela génère une forte demande pour un système capable de permettre le passage de l'air comprimé nécessaire à la respiration et, en même temps, permettant d'éviter l'entrée d'eau lorsque le réducteur de pression n'est pas fixé à une valve d'un réservoir et est immergé dans de l'eau, comme celle qui pourrait être trouvée, par exemple, dans le fond d'un bateau.

Des exemples de l'état de la technique sont décrits notamment dans les documents JPH08198181, US7921872, US2004079419, US2007144592, US2008149103 et US2006157123.

Les dispositifs décrits ci-dessus sont essentiellement basées sur deux concepts.

Un premier concept ne comporte aucun élément d'étanchéité, celui-ci étant remplacé par une barrière poreuse qui peut être constituée d'un disque en matériau de mousse à microcellules ouvertes ou d'une membrane pourvue de micro-fentes ou de trous d'épingle. En d'autres termes, une barrière pourvue d'étroits passages dont la fonction, qui est de permettre à de l'air comprimé de passer à travers tout en arrêtant l'eau, est essentiellement basée sur les différences de densité et d'efficacité de pénétration de l'air comprimé et de l'eau non-comprimée. Le dispositif est toujours ouvert et aucune opération d'ouverture physique de l'appareil n'est prévue. Ces dispositifs ne sont pas applicables à des appareils respiratoires, en particulier à ceux qui sont exposés à de l'eau salée. Ceci parce que les passages étroits formeraient des limitations inacceptables pour la capacité d'écoulement d'air du détendeur, et parce que ces passages étroits pourraient facilement être obstrués et/ou bouchés par des dépôts de sel inévitables. Il est à noter que l'utilisation de ce type de dispositif serait potentiellement très dangereuse, car, en cas de colmatage ou bouchage des passages étroits, par exemple par dépôts de sel, et/ou une ouverture brusque de la valve du réservoir (montée rapide de la pression jusqu'à 300 bars), et/ou une demande de grande quantité d'air (travaux lourds dans les eaux profondes), le débit d'air requis serait souvent supérieur à la capacité d'écoulement de la barrière poreuse. Une conséquence pourrait être la rupture de la barrière poreuse, avec un risque qu'une ou plusieurs partie(s) détachée(s) de ladite barrière poreuse pourrait bloquer le flux d'air vers l'utilisateur, avec des conséquences potentiellement létales.

Un second concept prévoit d'utiliser un élément d'étanchéité, généralement constitué d'un élément d'obturation maintenu dans sa position d'obturation par un élément de rappel, tel qu'un ressort. Ce second concept peut être utilisé dans deux applications différentes:
- une première application utilise en tant qu'élément d'étanchéité un couvercle placé à l'extérieur du conduit d'entrée d'air du réducteur de pression, et sollicité par un ressort pour recouvrir et obturer l'orifice d'entrée dans la direction de l'écoulement d'air. Son ouverture nécessite un déplacement manuel ou mécanique du couvercle, qui n'est pas effectué par l'air comprimé mais qui peut être réalisé automatiquement lors de la connexion du réducteur de pression à la valve du réservoir d'air comprimé. Cette solution est très complexe et coûteuse et expose plusieurs pièces mobiles se déplaçant les unes par rapport aux autres à l'eau salé et à des dépôts de sel, avec un risque évident de dysfonctionnement, en particulier dans la phase de retour vers la position d'obturation;
- une seconde solution utilise en tant qu'élément d'étanchéité un bouchon en forme de piston coulissant à l'intérieur du conduit d'entrée d'air du réducteur de pression, et sollicité par un ressort pour boucher et obturer l'orifice d'entrée dans la direction opposée à l'écoulement de l'air. L'ouverture est assurée par l'action de l'air comprimé et est réalisée par un déplacement axial de l'élément d'étanchéité (piston/bouchon) dans le conduit d'écoulement d'air. Cette solution est également complexe et coûteuse, et peut également poser des problèmes en raison de l'exposition à des dépôts de sel et à de l'eau salée. En raison de la relation mécanique étroite entre le piston/bouchon, le ressort et le conduit, ceci peut entraîner des frottements importants et une limitation des mouvements entre ces pièces. De plus, la présence dans le conduit d'entrée d'air du piston/bouchon et du ressort génère des limitations à l'écoulement et des turbulences dans le flux d'air comprimé, ce qui peut affecter les performances du détendeur.

Les caractéristiques du préambule de la revendication 1 sont connues du document EP1334904 qui décrit une solution alternative sans système d'obturation mais avec un piège à eau. La présente invention a pour but de fournir un système de raccordement comportant un dispositif d'obturation pour réducteur de pression, notamment pour un détendeur de plongée, qui ne reproduit pas les inconvénients susmentionnés.

La présente invention a notamment pour but de fournir un tel système qui fonctionne de manière fiable en toutes conditions d'utilisation.

La présente invention a également pour but de fournir un tel système qui est capable de fournir un débit d'air élevé, conforme à la demande de performance de l'industrie de la plongée sous-marine.

La présente invention a également pour but de fournir un tel système dont les mouvements d'ouverture et d'obturation ne sont pas ou peu affectés par l'eau salé.

La présente invention a également pour but de fournir un tel système qui soit simple et peu coûteux à fabriquer et à assembler.

La présente invention a donc pour objet un système de raccordement, notamment pour réducteur de pression d'un détendeur de plongée, comprenant un connecteur comprenant une première extrémité adaptée à se fixer à un réducteur de pression, et une seconde extrémité adaptée à se fixer à une valve d'un réservoir d'air comprimé, ledit connecteur comprenant un passage interne s'étendant sensiblement axialement entre lesdites première et seconde extrémités, ledit passage interne comportant un filtre, de préférence en acier inoxydable fritté, et un organe de retenue fixé à ladite seconde extrémité et supportant d'une part ledit filtre, et d'autre part un joint torique principal, ledit organe de retenue formant une ouverture d'entrée, ledit système comportant un dispositif d'obturation comportant un organe d'obturation déformable et/ou déplaçable entre une position d'obturation, dans laquelle il obture ladite ouverture d'entrée, et une position d'ouverture, dans laquelle il n'obture pas ladite ouverture d'entrée, ledit organe d'obturation étant sollicité élastiquement vers sa position d'obturation et étant déformé et/ou déplacé vers sa position d'ouverture par l'air comprimé venant dudit réservoir d'air comprimé, ledit organe d'obturation étant déformé et/ou déplacé vers sa position d'ouverture dans une direction sensiblement transversale à la direction d'écoulement du flux d'air comprimé.

Avantageusement, ledit organe d'obturation est réalisé en un matériau élastiquement déformable, tel qu'un élastomère.

Avantageusement, ledit organe d'obturation, en position d'ouverture, est disposé hors dudit passage interne, de sorte qu'il ne limite pas l'écoulement du flux d'air comprimé.

Selon une première variante avantageuse, ledit organe d'obturation est disposé à l'intérieur dudit organe de retenue.

Avantageusement, ledit organe d'obturation coopère en position d'obturation avec un élément d'obturation fixe fixé à l'intérieur dudit organe de retenue.

Avantageusement, ledit élément d'obturation fixe ne s'étend pas axialement vers l'intérieur dudit passage interne au-delà dudit organe d'obturation.

En variante, ledit élément d'obturation s'étend axialement vers l'intérieur dudit passage interne au-delà dudit organe d'obturation.

Avantageusement, ledit organe d'obturation comporte une partie fixe par rapport audit organe de retenue.

Selon une seconde variante avantageuse, ledit organe d'obturation est disposé à l'extérieur dudit organe de retenue.

Avantageusement, ledit organe d'obturation forme ledit joint torique principal dudit système.

Avantageusement, en position d'obturation, ledit organe d'obturation coopère directement avec ledit organe de retenue.

Avantageusement, ledit connecteur comporte une bague filetée pour fixer ladite seconde extrémité à une sortie filetée de ladite valve du réservoir d'air comprimé.

Avantageusement, ledit connecteur comporte un système d'étrier pour fixer ladite seconde extrémité à une sortie non-filetée de ladite valve du réservoir d'air comprimé.

La présente invention a aussi pour objet un réducteur de pression, comportant un système de raccordement tel que décrit ci-dessus.

La présente invention a aussi pour objet une valve de réservoir d'air comprimé comportant un système de raccordement tel que décrit ci-dessus.

La présente invention a aussi pour objet un détendeur de plongée comportant un réducteur de pression ou une valve tels que décrits ci-dessus.

Ces avantages et caractéristiques et d'autres de la présente invention apparaîtront plus clairement au cours de la description détaillée suivante, faite en référence aux dessins joints, donnés à titre d'exemples non limitatifs, et sur lesquels :
La figure 1 est une vue schématique en coupe d'un système de raccordement conventionnel pour réducteur de pression, dépourvu de dispositif d'obturation,
La figure 1a est une vue en perspective d'un détendeur comportant un réducteur de pression et le système de raccordement conventionnel de la figure 1,
La figure 2 est une vue similaire à celle de la figure 1, montrant un autre système de raccordement conventionnel pour réducteur de pression, dépourvu de dispositif d'obturation,
La figure 3 est une vue similaire à celle de la figure 1, avec un dispositif d'obturation selon un premier mode de réalisation de la présente invention, en position d'obturation,
La figure 3a est une vue partielle de détail du dispositif de la figure 3,
La figure 4 est une vue similaire à celle de la figure 3, en position d'ouverture,
La figure 4a est une vue partielle de détail du dispositif de la figure 4,
La figure 5 est une vue similaire à celle de la figure 1, avec un dispositif d'obturation selon un second mode de réalisation de la présente invention, en position d'obturation,
La figure 5a est une vue partielle de détail du dispositif de la figure 5,
La figure 6 est une vue similaire à celle de la figure 5, en position d'ouverture,
La figure 6a est une vue partielle de détail du dispositif de la figure 6,
La figure 7 est une vue similaire à celle de la figure 1, avec un dispositif d'obturation selon un troisième mode de réalisation de la présente invention, en position d'obturation,
La figure 7a est une vue partielle de détail du dispositif de la figure 7,
La figure 8 est une vue similaire à celle de la figure 7, en position d'ouverture,
La figure 8a est une vue partielle de détail du dispositif de la figure 8,
La figure 9 est une vue schématique en perspective découpée du dispositif de la figure 8,
Les figures 10 et 11 sont des vues schématiques partielles de détail d'un dispositif d'obturation selon une variante de réalisation de la présente invention, respectivement en position d'obturation et en position d'ouverture,
La figure 12 est une vue similaire à celle de la figure 1, avec un dispositif d'obturation selon un quatrième mode de réalisation de la présente invention, en position d'obturation,
La figure 12a est une vue partielle de détail du dispositif de la figure 12,
La figure 13 est une vue similaire à celle de la figure 12, en position d'ouverture,
La figure 13a est une vue partielle de détail du dispositif de la figure 13,
La figure 14 est une vue similaire à celle de la figure 1, avec un dispositif d'obturation selon un cinquième mode de réalisation de la présente invention, en position d'obturation,
La figure 15 est une vue similaire à celle de la figure 14, en position d'ouverture, et
La figure 15a est une vue partielle de détail du dispositif de la figure 15.

Dans la description, les termes "axial", "radial" et "transversal" se réfèrent à la direction principale de déplacement de l'air comprimé dans le système de raccordement, c'est-à-dire que le terme "axial" correspond à la direction verticale dans l'orientation des figures et les termes "transversal" et "radial" correspondent à la direction horizontale dans l'orientation des figures. De même, les termes "supérieur" et "inférieur" se réfèrent à l'orientation des figures.

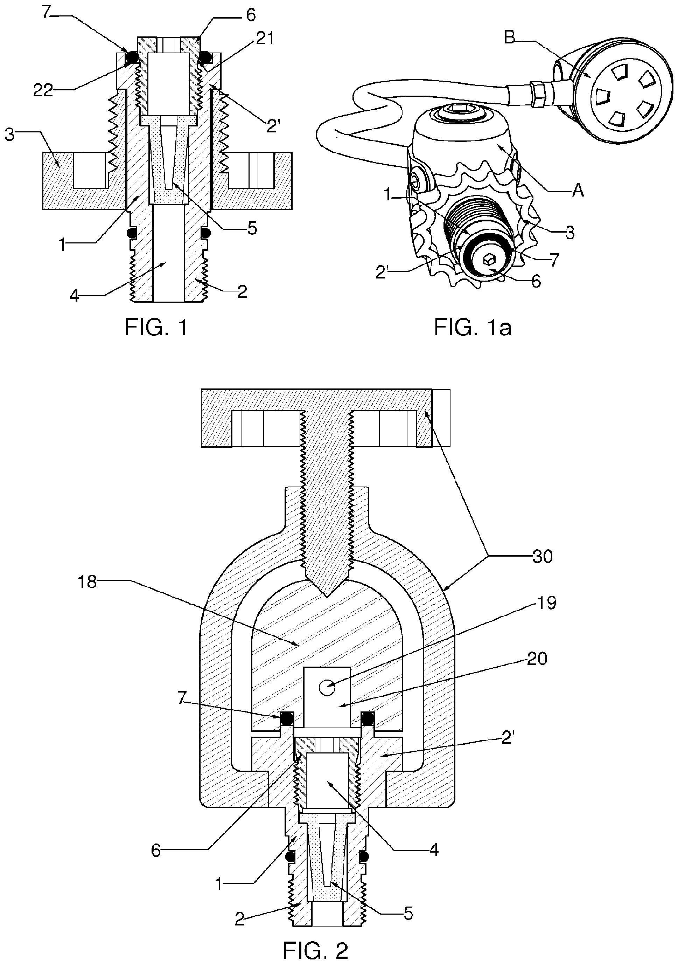

Les figures 1 et 1a montrent une première configuration couramment utilisée pour un système de raccordement permettant la connexion d'un réducteur de pression A, ou premier étage, à une valve d'un réservoir d'air comprimé (non représentée sur ces figues), sans aucun moyen pour empêcher l'entrée d'eau. Ce système de raccordement se compose d'un connecteur 1, fixé par une première extrémité 2 au réducteur de pression A, lui-même relié via un tuyau à valve sur commande, ou second étage, disposée dans un embout buccal B. Le système de raccordement est pourvu d'une bague filetée 3 pour fixer la seconde extrémité 2' du connecteur 1 à la sortie filetée d'une valve d'un réservoir d'air comprimé.

Le connecteur 1 est muni d'un passage interne 4 supportant un filtre 5 en acier inoxydable fritté, et un organe de retenue fileté 6 coopérant avec ledit filtre 5 et qui supporte le joint torique principal 7. Dans cette configuration, l'eau est libre d'entrer dans le réducteur de pression au cas où celui-ci est immergé, puisque le raccordement ne comporte aucun moyen d'obturation contre la pénétration de l'eau.

La figure 2 illustre une autre configuration couramment utilisée pour un système de raccordement permettant la connexion d'un réducteur de pression (non représenté sur cette figure, mais similaire à celui de la figure 1A), ou premier étage, à une valve 18 d'un réservoir d'air comprimé, sans aucun moyen pour empêcher l'entrée d'eau. Cette seconde configuration, dite étrier, diffère de la première configuration par le mode de fixation de la seconde extrémité 2' du raccordement à la sortie de la valve 18 du réservoir d'air comprimé. La bague filetée 3 de la figure 1 est ici remplacée par un ensemble formant un étrier 30 qui permet de fixer une sortie non filetée de la valve 18 du réservoir d'air comprimé audit connecteur 1.

La présente invention sera décrite ci-après en référence à plusieurs modes de réalisation concernant la première configuration de la figure 1, mais elle pourrait aussi s'adapter de manière correspondante, pour au moins certains de ces modes de réalisation, à ladite seconde configuration en étrier de la figure 2. Le réducteur de pression A d'une part et la valve 18 du réservoir d'air comprimé d'autre part peuvent être de configuration standard, seul le système de raccordement étant modifié par la présente invention.

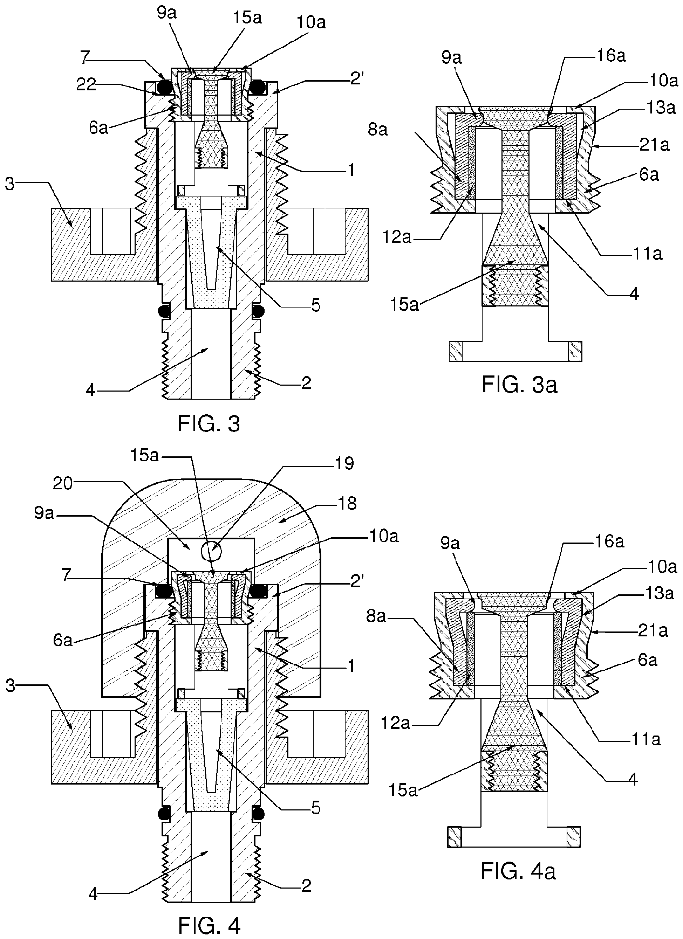

Les figures 3 à 4a montrent un premier mode de réalisation avantageux de l'invention. Le système de raccordement, notamment pour réducteur de pression d'un détendeur de plongée, comprend un connecteur 1 ayant une première extrémité 2 adaptée à se fixer à un réducteur de pression (non représenté), et une seconde extrémité 2' adaptée à se fixer à une valve 18 d'un réservoir d'air comprimé. Le connecteur 1 comprend un passage interne 4 qui s'étend sensiblement axialement entre lesdites première et seconde extrémités. De manière classique, ledit passage interne 4 comporte un filtre 5, de préférence en acier inoxydable fritté, et un organe de retenue 6a fixé à ladite seconde extrémité 2' et supportant d'une part ledit filtre 5, et d'autre part un joint torique principal 7. Ledit organe de retenue 6a forme une ouverture d'entrée et ledit système comporte un dispositif d'obturation au niveau de ladite ouverture d'entrée. Ce dispositif d'obturation comporte un organe d'obturation 9a déformable et/ou déplaçable entre une position d'obturation, dans laquelle il obture ladite ouverture d'entrée, et une position d'ouverture, dans laquelle il n'obture pas ladite ouverture d'entrée, ledit organe d'obturation 9a étant sollicité élastiquement vers sa position d'obturation et étant déformé et/ou déplacé vers sa position d'ouverture par l'air comprimé venant dudit réservoir d'air comprimé. Une pression minimale est nécessaire pour déplacer ledit organe d'obturation 9a vers sa position d'ouverture, pour éviter tout risque d'ouverture lorsque ladite ouverture d'entrée repose dans une faible profondeur d'eau, typiquement sur le fond d'un bateau. Ainsi, avec un seuil d'ouverture à environ 0,5 bar, on garantit que le dispositif d'obturation ne s'ouvrira pas sous l'effet de cette eau stagnante.

Il est à noter que pour des raisons de sécurité de fonctionnement des réducteurs de pression pour détendeur de plongée, ce dispositif d'obturation ne peut en aucun cas fonctionner comme une valve anti-retour unidirectionnelle, et doit au contraire pouvoir permettre l'écoulement d'air dans les deux sens.

Selon l'invention, ledit organe d'obturation 9a est déformé et/ou déplacé vers sa position d'ouverture dans une direction sensiblement transversale à la direction d'écoulement du flux d'air comprimé. Avantageusement, ledit organe d'obturation 9a est réalisé en un matériau élastiquement déformable, tel qu'un élastomère.

Avantageusement, ledit organe d'obturation 9a en position d'ouverture est disposé hors dudit passage interne 4, de sorte qu'il ne limite pas ou que très peu l'écoulement du flux d'air comprimé.

De manière avantageuse, ledit organe d'obturation 9a est disposé à l'intérieur dudit organe de retenue 6a et coopère en position de fermeture avec un élément d'obturation fixe 15a, fixé à l'intérieur dudit organe de retenue 6a.

Comme visible sur les figures 3a et 4a, l'organe d'obturation 9a est maintenu entre ledit organe de retenue 6a et ledit élément d'obturation fixe 15a, et comporte avantageusement une partie fixe 8a par rapport audit organe de retenue 6a. Avantageusement, l'organe d'obturation 9a et la partie fixe 8a sont réalisés d'une pièce en un matériau élastomère approprié.

Lorsque de l'air comprimé arrive dans le connecteur 1, il va déformer élastiquement l'organe d'obturation 9a vers l'extérieur, comme illustré sur les figure 4 et 4a, ce qui va ouvrir ladite ouverture d'entrée. Lorsque le flux d'air comprimé s'arrête, ledit organe d'obturation 9a va revenir élastiquement vers sa position d'obturation des figures 3 et 3a.

Dans ce premier mode de réalisation, l'organe de retenue 6a forme le support du dispositif d'obturation. L'organe d'obturation 9a est une projection radiale, fabriquée en un matériau élastomère approprié, solidaire d'un manchon creux comportant ladite partie fixe 8a. L'organe de retenue 6a est pourvu d'un premier épaulement de retenue 10a qui vient en prise axialement avec l'organe d'obturation 9a, et d'un second épaulement de retenue 11a qui vient en prise axialement et transversalement avec ladite partie fixe 8a du manchon creux solidaire de l'organe d'obturation 9a. Un manchon rigide de retenue 12a peut être prévu à l'intérieur dudit manchon creux, s'étendant depuis ledit second épaulement de retenue 11a dudit organe de retenue 6a jusqu'à ladite projection radiale déformable transversalement formant l'organe d'obturation 9a.

L'organe de retenue 6a est également pourvu d'une cavité 13a qui entoure, en position d'obturation, ledit organe d'obturation 9a.

Ledit élément d'obturation fixe 15a coopère via une surface d'étanchéité 16a avec ledit organe d'obturation 9a en position d'obturation.

La fermeture contre la pénétration de l'eau est assurée par le contact étanche entre l'organe d'obturation 9a et la surface d'étanchéité 16a de l'élément d'obturation fixe 15a.

Sur la figure 4, le connecteur 1 est fixé à la sortie d'une valve 18 du réservoir d'air comprimé, pourvue d'un trou 19 et d'une chambre 20.

Lorsque le flux d'air comprimé parvient, par l'intermédiaire du trou 19 et de la chambre 20 de la valve 18 du réservoir d'air comprimé, au contact du dispositif d'obturation, il déforme l'organe d'obturation 9a transversalement ou radialement vers l'extérieur, dans la cavité 13a de l'organe de retenue 6a.

Il est à noter en outre que l'organe de retenue 6a comporte une surface conique 21a, dont la conception est normalisée par la norme européenne EN 144-2, et dont le diamètre est d'environ 1 mm de plus que le diamètre intérieur du joint torique principal 7. Cette forme conique force le joint torique 7 contre la surface conique 21a et contre une surface radiale 22 du connecteur 1, assurant ainsi une étanchéité naturelle contre la pénétration de l'eau entre l'organe de retenue 6a et le connecteur 1.

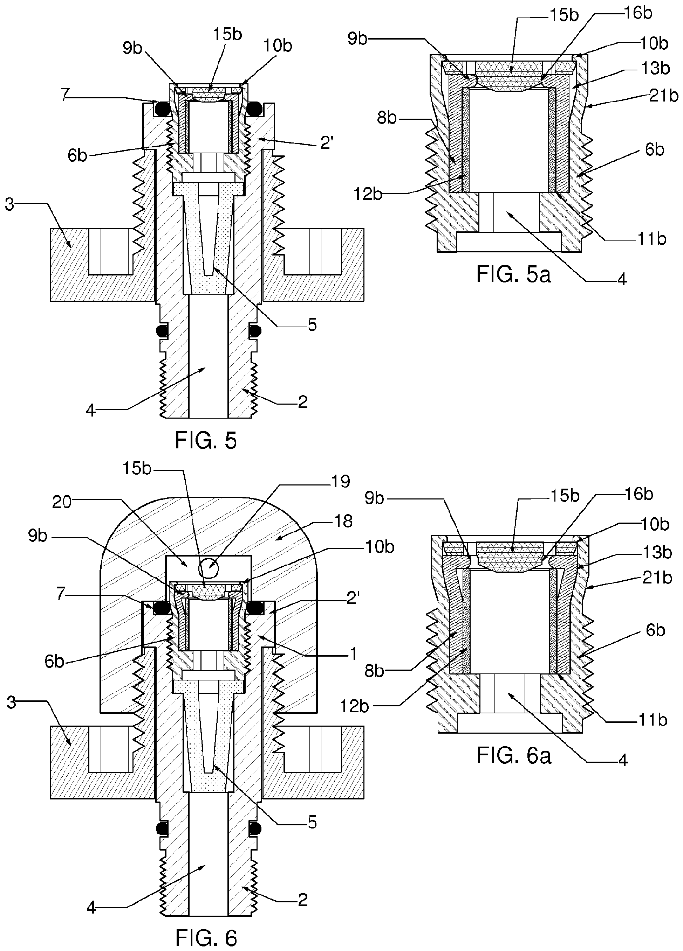

Les figures 5 à 6a illustrent un second mode de réalisation de l'invention, qui est une variante du mode de réalisation des figures 3 à 4a. Seules les différences par rapport au premier mode de réalisation seront décrites ci-après.

Dans cette variante, l'élément d'obturation fixe 15b est disposé à l'intérieur de l'organe de retenue 6b et à l'extérieur du passage interne 4. Un épaulement 10b de l'organe de retenue 6b assure avantageusement cet assemblage. Cette variante est avantageuse en ce qu'elle permet d'éviter de placer un élément, en l'occurrence l'élément d'obturation fixe 15b, dans le passage interne 4, ce qui pourrait potentiellement limiter le débit du flux d'air comprimé. Pour le reste, ce second mode de réalisation est similaire au précédent mode de réalisation.

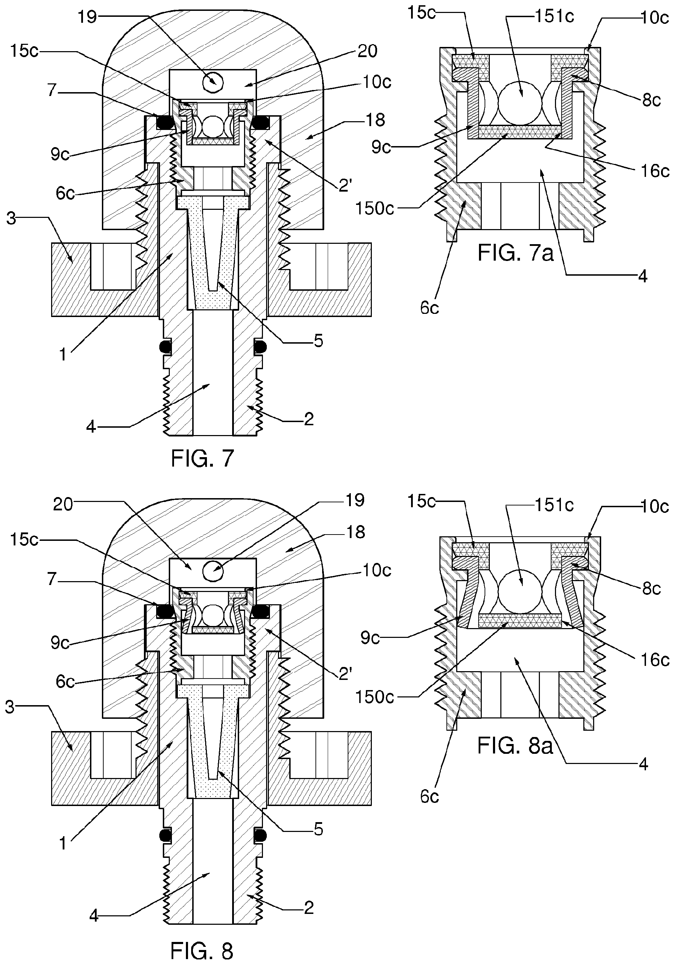

Les figures 7 à 9 illustrent un troisième mode de réalisation avantageux de la présente invention. Seules les différences par rapport aux précédents modes de réalisation seront décrites ci-après.

Dans ce troisième mode de réalisation, un élément d'obturation fixe 15c est maintenu dans la partie supérieure de l'organe de retenue 6c par un épaulement radial 10c de celui-ci. L'élément d'obturation fixe 15c est ouvert axialement sur ladite chambre 20 de la valve 18, et fermé axialement sur ledit passage interne 4 par une paroi axiale 150c. Il comporte des ouvertures latérales 151c permettant le passage du flux d'air comprimé depuis ladite valve 18 vers ledit passage interne 4. Ces ouvertures latérales 151c sont fermées, en position d'obturation, par ledit organe d'obturation 9c, réalisé ici sous la forme d'un manchon déformable transversalement ou radialement vers l'extérieur. Ce manchon déformable 9c est solidaire d'une bride radiale formant partie fixe 8c, qui est maintenue fixement entre ledit organe de retenue 6c et ledit élément d'obturation fixe 15c. Le bord radialement externe 16c de ladite paroi axiale 150c de l'élément d'obturation fixe 15c forme la surface de coopération étanche avec ledit organe d'obturation 9c.

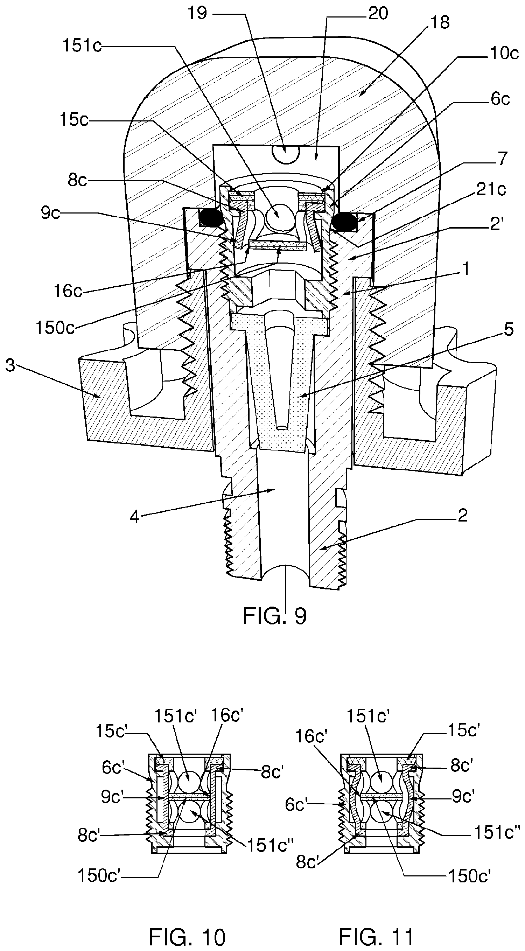

Comme visible sur les figures 8, 8a et 9, lorsque le flux d'air comprimé arrive dans la chambre 20 de la valve 18, il pénètre dans ledit élément d'obturation fixe 15c par son ouverture axiale supérieure, puis traverse lesdites ouvertures latérales 151e, pour déformer ledit organe d'obturation 9c et ainsi le décoller de ladite surface de coopération étanche 16c. Ceci ouvre ladite ouverture d'entrée et permet le passage du flux d'air comprimé. Lorsque ce flux d'air s'arrête, l'organe d'obturation 9c revient élastiquement vers sa position d'obturation, refermant ladite ouverture d'entrée et empêchant ainsi l'entrée d'eau non pressurisée dans le passage interne 4.

Les figures 10 et 11 illustrent une variante de réalisation du troisième mode de réalisation des figures 7 à 9. Dans cette variante, l'organe d'obturation 9c' est maintenu fixement entre ledit organe de retenue 6c' et ledit élément d'obturation fixe 15c' à ses deux extrémité axiales, formant deux parties fixes 8c', et l'organe d'obturation 9c' est disposée axialement entre ces deux parties fixes 8c'. L'élément d'obturation fixe 15c' comporte des premières ouvertures latérales 151c' et des secondes ouvertures latérales 151c", séparées axialement par une paroi radiale 150c'. Le bord radialement externe 16c' de ladite paroi axiale 150c' de l'élément d'obturation fixe 15c' forme la surface de coopération étanche avec ledit organe d'obturation 9c'. Cette variante permet de réaliser un dispositif d'obturation qui fonctionne dans les deux sens.

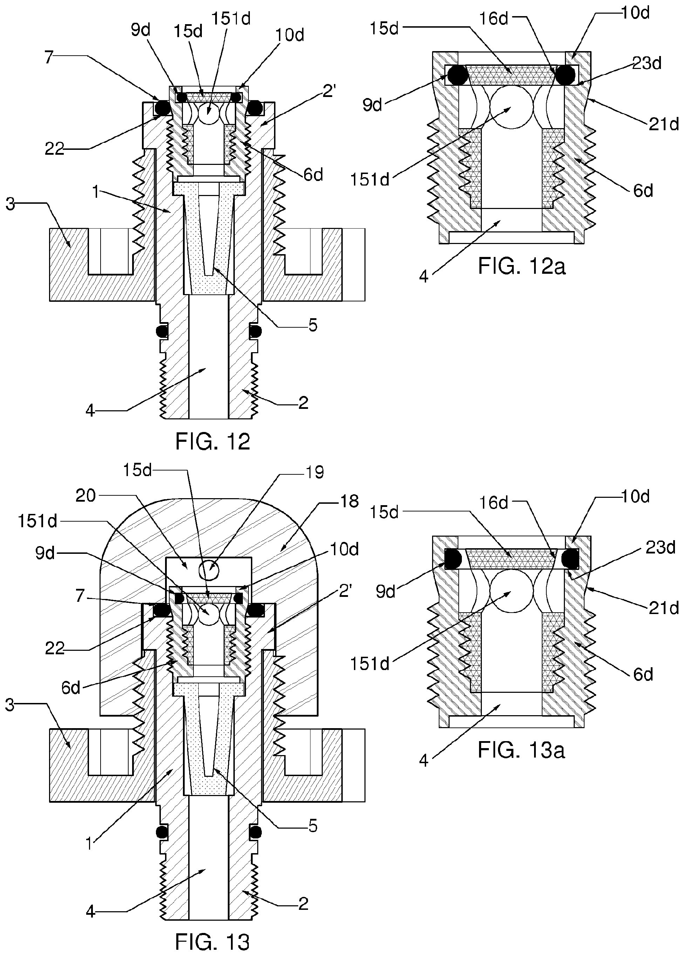

Les figures 12 à 13a illustrent un quatrième mode de réalisation avantageux de l'invention. Seules les différences par rapport au troisième mode de réalisation seront décrites ci-après.

Dans ce mode de réalisation, basé sur le troisième mode de réalisation, l'organe d'obturation 9d est formé par un joint torique. Il n'y a donc pas ici de partie fixe réalisée d'une pièce avec l'organe d'obturation 9d. L'organe d'obturation 9d coopère de manière étanche en position d'obturation avec l'organe de retenue 6d, notamment avec un évidement pourvu d'une surface radiale 23d, et avec une surface 16d, de préférence conique, de l'élément d'obturation fixe 15d. Les figures 13 et 13a montrent le joint torique 9d en position d'ouverture, déformé et déplacé par l'air comprimé, ce qui ouvre le passage pour l'air. Dans ce mode de réalisation l'élément d'obturation fixe 15d est complètement fermé au niveau de sa paroi axial supérieure. Un bord radialement externe de ladite paroi axial supérieure forme la surface de coopération étanche 16d avec ledit organe d'obturation 9d. Le flux d'air comprimé, après avoir ouvert l'organe d'obturation 9d, peut pénétrer dans ledit passage interne 4 à travers des ouvertures latérales 151d dudit élément d'obturation fixe 15d.

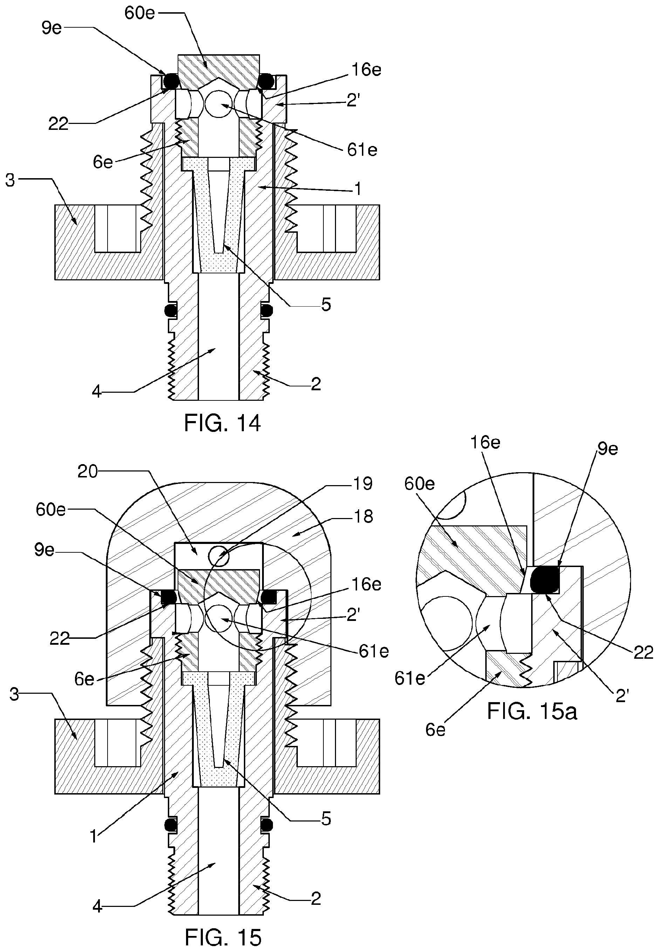

Les figures 14 à 15a illustrent un cinquième mode de réalisation avantageux de l'invention. Seules les différences par rapport aux précédents modes de réalisation seront décrites ci-après.

Ce mode de réalisation utilise en tant qu'organe d'obturation le joint torique principal 9e, qui coopère de manière étanche en position d'obturation avec une surface radiale 22 du connecteur 1 et avec une surface 16e, de préférence conique, de l'organe de retenue 6e. Les figures 15 et 15a montrent le joint torique 9e en position d'ouverture, déformé et déplacé par l'air comprimé, ce qui ouvre le passage pour l'air. Dans ce mode de réalisation, et contrairement aux modes de réalisation décrit précédemment, l'organe de retenue 6e est complètement fermé au niveau de sa paroi axial supérieure 60e. Un bord radialement externe de ladite paroi axial supérieure 60e forme la surface de coopération étanche 16e avec ledit organe d'obturation 9e. Le flux d'air comprimé, après avoir ouvert l'organe d'obturation 9e, peut pénétrer dans ledit passage interne 4 à travers des ouvertures latérales 61e dudit organe de retenue 6e. Dans ce mode de réalisation, il n'y a pas d'élément d'obturation fixe, comme dans les modes de réalisation précédents, et l'organe d'obturation 9e coopère directement avec ledit organe de retenue 6e.

La présente invention permet donc de fournir un système de raccordement qui, selon les modes de réalisation, présente un ou plusieurs des avantages suivantes:
- l'organe d'obturation est ouvert par l'air comprimé, ce qui est simple et sûr;
- le système comporte un organe d'obturation et requiert une véritable opération physique d'ouverture dudit organe d'obturation, ce qui renforce la sécurité du système;
- l'organe d'obturation est disposé à l'extérieur du passage interne 4, ce qui améliore les performances de débit d'air, en combinant une obturation à l'extérieur du passage interne 4 avec une ouverture par le flux d'air comprimé;
- le mouvement d'ouverture de l'organe d'obturation est dirigé radialement ou transversalement vers l'extérieur et est donc sensiblement perpendiculaire au flux d'air comprimé, ce qui permet de placer l'organe d'obturation à l'extérieur du passage interne 4; et
- l'organe d'obturation est élastiquement sollicité vers sa position d'obturation de par sa conception en un matériau élastiquement déformable, de sorte qu'aucun moyen de sollicitation externe, tel qu'un ressort, n'est nécessaire pour solliciter l'organe de fermeture vers sa position d'obturation; ceci simplifie le système et améliore la sécurité de fonctionnement et/ou les performances d'écoulement du flux d'air comprimé.

Bien que la présente invention ait été décrite en référence à plusieurs modes de réalisation avantageux de celle-ci, il est entendu qu'un homme du métier peut y apporter toutes modifications utiles, sans sortir du cadre de la présente invention tel que défini par les revendications annexées.

## Revendications

1. Système de raccordement, notamment pour réducteur de pression d'un détendeur de plongée, comprenant un connecteur (1) comprenant une première extrémité (2) adaptée à se fixer à un réducteur de pression, et une seconde extrémité (2') adaptée à se fixer à une valve d'un réservoir d'air comprimé, ledit connecteur (1) comprenant un passage interne (4) s'étendant sensiblement axialement entre lesdites première et seconde extrémités, ledit passage interne (4) comportant un filtre (5), de préférence en acier inoxydable fritté, et un organe de retenue (6a; 6b; 6c; 6c'; 6d; 6e) fixé à ladite seconde extrémité (2') et supportant d'une part ledit filtre (5), et d'autre part un joint torique principal (7; 9e), ledit organe de retenue (6a; 6b; 6c; 6c'; 6d; 6e) formant une ouverture d'entrée, **caractérisé en ce que** ledit système comporte un dispositif d'obturation permettant l'écoulement d'air dans les deux sens, ledit dispositif d'obturation comportant un organe d'obturation (9a; 9b; 9c; 9c'; 9d; 9e) déformable et/ou déplaçable entre une position d'obturation, dans laquelle il obture ladite ouverture d'entrée, et une position d'ouverture, dans laquelle il n'obture pas ladite ouverture d'entrée, ledit organe d'obturation (9a; 9b; 9c; 9c'; 9d; 9e) étant sollicité élastiquement vers sa position d'obturation et étant déformé et/ou déplacé vers sa position d'ouverture par l'air comprimé venant dudit réservoir d'air comprimé, ledit organe d'obturation (9a; 9b; 9c; 9c'; 9d; 9e) étant déformé et/ou déplacé vers sa position d'ouverture dans une direction sensiblement transversale à la direction d'écoulement du flux d'air comprimé.

2. Système selon la revendication 1, dans lequel ledit organe d'obturation (9a; 9b; 9c; 9c'; 9d; 9e) est réalisé en un matériau élastiquement déformable, tel qu'un élastomère.

3. Système selon la revendication 1 ou 2, dans lequel ledit organe d'obturation (9a; 9b; 9c; 9c'; 9d; 9e), en position d'ouverture, est disposé hors dudit passage interne (4), de sorte qu'il ne limite pas l'écoulement du flux d'air comprimé.

4. Système selon l'une quelconque des revendications précédentes, dans lequel ledit organe d'obturation (9a; 9b; 9c; 9c'; 9d) est disposé à l'intérieur dudit organe de retenue (6a; 6b; 6c; 6c'; 6d).

5. Système selon la revendication 4, dans lequel ledit organe d'obturation (9a; 9b; 9c; 9c'; 9d) coopère en position d'obturation avec un élément d'obturation fixe (15a; 15b; 15c; 15c'; 15d) fixé à l'intérieur dudit organe de retenue (6a; 6b; 6c; 6c'; 6d).

6. Système selon la revendication 5, dans lequel ledit élément d'obturation fixe (15b; 15c; 15c') ne s'étend pas axialement vers l'intérieur dudit passage interne (4) au-delà dudit organe d'obturation (9b; 9c; 9c').

7. Système selon la revendication 5, dans lequel ledit élément d'obturation (15a; 15d) s'étend axialement vers l'intérieur dudit passage interne (4) au-delà dudit organe d'obturation (9a; 9d).

8. Système selon l'une quelconque des revendications 4 à 7, dans lequel ledit organe d'obturation (9a; 9b; 9c; 9c') comporte une partie fixe (8a; 8b; 8c; 8c') par rapport audit organe de retenue (6a; 6b; 6c; 6c').

9. Système selon l'une quelconque des revendications 1 à 3, dans lequel ledit organe d'obturation (9e) est disposé à l'extérieur dudit organe de retenue (6e).

10. Système selon la revendication 9, dans lequel ledit organe d'obturation (9e) forme ledit joint torique principal dudit système.

11. Système selon la revendication 9 ou la revendication 10, dans lequel, en position d'obturation, ledit organe d'obturation (9e) coopère directement avec ledit organe de retenue (6e).

12. Système selon l'une quelconque des revendications précédentes, dans lequel ledit connecteur (1) comporte une bague filetée (3) pour fixer ladite seconde extrémité (2') à une sortie filetée de ladite valve (18) du réservoir d'air comprimé.

13. Système selon l'une quelconque des revendications 1 à 11, dans lequel ledit connecteur (1) comporte un système d'étrier (30) pour fixer ladite seconde extrémité (2') à une sortie non-filetée de ladite valve (18) du réservoir d'air comprimé.

14. Réducteur de pression (A), **caractérisé en ce qu'**il comporte un système de raccordement selon l'une quelconque des revendications précédentes.

15. Valve (18) de réservoir d'air comprimé, **caractérisée en ce qu'**elle comporte un système de raccordement selon l'une quelconque des revendications 1 à 13.

16. Détendeur de plongée, **caractérisé en ce qu'**il comporte un réducteur de pression (A) selon la revendication 14 ou une valve (18) selon la revendication 15.

## Patentansprüche

1. Verbindungssystem, insbesondere für einen Druckminderer eines Tauchreglers, mit einem Verbinder (1), der ein erstes Ende (2), das zur Verbindung mit einem Druckminderer ausgelegt ist, und ein zweites Ende (2'), das zur Verbindung mit einem Ventil eines Druckluftbehälters ausgelegt ist, umfasst, wobei der Verbinder (1) einen inneren Durchgang (4) umfasst, der sich im Wesentlichen axial zwischen dem ersten und dem zweiten Ende erstreckt, wobei der innere Durchgang (4) einen Filter (5), vorzugsweise aus gesintertem Edelstahl, und ein Halteelement (6a; 6b; 6c'; 6d; 6e) aufweist, das an dem zweiten Ende (2') befestigt ist und einerseits den Filter (5) und andererseits einen Haupt-O-Ring (7; 9e) trägt, wobei das Halteelement (6a; 6b; 6c'; 6d; 6e) eine Einlassöffnung bildet, **dadurch gekennzeichnet, dass** das System ein Schließelement umfasst, das einen Luftstrom in beide Richtungen ermöglicht, wobei das Schließelement ein Schließglied (9a; 9b; 9c; 9c; 9c'; 9d; 9e) umfasst, das zwischen einer Schließstellung, in der es die Einlassöffnung verschließt, und einer geöffneten Stellung, in der es die Einlassöffnung nicht schließt, verformbar und/oder verschiebbar ist, wobei das Schließglied (9a; 9b; 9c; 9c; 9c'; 9d; 9e) in Richtung seiner Schließstellung elastisch belastet ist und durch Druckluft, die aus dem Druckluftbehälter kommt, in seine Öffnungsstellung verformt und/oder verschoben wird, wobei das Schließglied (9a; 9b; 9c; 9c; 9c'; 9d; 9e) in eine Richtung, die im Wesentlichen quer zur Strömungsrichtung des Druckluftstroms verläuft, in seine Öffnungsstellung verformt und/oder verschoben wird.

2. System nach Anspruch 1, bei dem das Schließglied (9a; 9b; 9c; 9c; 9c'; 9d; 9e) aus einem elastisch verformbaren Material ausgeführt ist, beispielsweise einem Elastomer.

3. System nach Anspruch 1 oder 2, bei dem das Schließglied (9a; 9b; 9c; 9c; 9c'; 9d; 9e) in geöffneter Stellung außerhalb des inneren Durchgangs (4) angeordnet ist, so dass es den Druckluftstrom nicht begrenzt.

4. System nach einem der vorhergehenden Ansprüche, bei dem das Schließglied (9a; 9b; 9c; 9c; 9c'; 9d; 9e) im Inneren des Halteelements (6a; 6b; 6c'; 6d; 6e) angeordnet ist.

5. System nach Anspruch 4, bei dem das Schließglied (9a; 9b; 9c; 9c; 9c'; 9d; 9e) in seiner Schließstellung mit einem feststehenden Schließelement (15a; 15b; 15c'; 15d) zusammenwirkt, welches im Inneren des Halteelements (6a; 6b; 6c'; 6d; 6e) angeordnet ist.

6. System nach Anspruch 5, bei dem sich das feststehende Schließelement (15a; 15b; 15c'; 15d) nicht über das Schließglied (9b; 9c; 9c') hinaus axial zum Inneren des inneren Durchgangs (4) erstreckt.

7. System nach Anspruch 5, bei dem sich das Schließelement (15a; 15d) über das Schließglied (9a; 9d) hinaus axial zum Inneren des inneren Durchgangs (4) erstreckt.

8. System nach einem der Ansprüche 4 bis 7, bei dem das Schließglied (9a; 9b; 9c; 9c') einen in Bezug auf das Halteelement (6a; 6b; 6c; 6c') feststehenden Teil (8a; 8b; 8c; 8c') umfasst.

9. System nach einem der Ansprüche 1 bis 3, bei dem das Schließglied (9e) außerhalb des Halteelements (6e) angeordnet ist.

10. System nach Anspruch 9, bei dem das Schließglied (9e) den Haupt-O-Ring des Systems bildet.

11. System nach Anspruch 9 oder Anspruch 10, bei dem in der Schließstellung das Schließglied (9e) direkt mit dem Halteelement (6e) zusammenwirkt.

12. System nach einem der vorhergehenden Ansprüche, bei dem der Verbinder (1) einen Gewindering (3) umfasst, um das zweite Ende (2') an einem Gewindeausgang des Ventils (18) des Druckluftbehälters zu befestigen.

13. System nach einem der Ansprüche 1 bis 11, bei dem der Verbinder (1) ein Bügelsystem (30) umfasst, um das zweite Ende (2') an einem gewindefreien Auslass des Ventils (18) des Druckluftbehälters zu befestigen.

14. Druckminderer (A), **dadurch gekennzeichnet, dass** er ein Verbindungssystem nach einem der vorhergehenden Ansprüche umfasst.

15. Druckluftbehälterventil (18), **dadurch gekennzeichnet, dass** es ein Verbindungssystem nach einem der Ansprüche 1 bis 13 umfasst.

16. Tauchregler, **dadurch gekennzeichnet, dass** er einen Druckminderer (A) nach Anspruch 14 oder ein Ventil (18) nach Anspruch 15 umfasst.

## Claims

1. A connection system, in particular for a pressure reducer of a diving regulator, the system comprising a connector (1) having a first end (2) adapted to be fastened to a pressure reducer and a second end (2') adapted to be fastened to a valve of a compressed air cylinder, said connector (1) having an internal passage (4) extending substantially axially between said first and second ends, said internal passage (4) including a filter (5), preferably made of sintered stainless steel, and a retaining member (6a; 6b; 6c; 6c'; 6d; 6e) fastened to said second end (2') and supporting firstly said filter (5) and secondly a main O-ring (7; 9e), said retaining member (6a; 6b; 6c; 6c'; 6d; 6e) forming an inlet opening, **characterized in that** said system includes a shutter device allowing air to flow in both directions, said shutter device comprising a shutter member (9a; 9b; 9c: 9c'; 9d; 9e) that is deformable and/or movable between a shut position in which it shuts said inlet opening, and an open position in which it does not shut said inlet opening, said shutter member (9a; 9b; 9c: 9c'; 9d; 9e) being urged resiliently towards its shut position and being deformed and/or shifted towards its open position by compressed air coming from said compressed air cylinder, said shutter member (9a; 9b; 9c: 9c'; 9d; 9e) being deformed and/or shifted towards its open position in a direction extending substantially transversely relative to the flow direction of the compressed air stream.

2. A system according to claim 1, wherein said shutter member (9a; 9b; 9c: 9c'; 9d; 9e) is made of an elastically deformable material such as an elastomer.

3. A system according to claim 1 or claim 2, wherein said shutter member (9a; 9b; 9c: 9c'; 9d; 9e), when in the open position, is arranged outside said internal passage (4) so that it does not limit the flow of the compressed air stream.

4. A system according to any preceding claim, wherein said shutter member (9a; 9b; 9c: 9c'; 9d) is arranged inside said retaining member (6a; 6b; 6c; 6c'; 6d).

5. A system according to claim 4, wherein said shutter member (9a; 9b; 9c: 9c'; 9d), when in the shut position, co-operates with a stationary shutter element (15a; 15b; 15c; 15c'; 15d) fastened inside said retaining member (6a; 6b; 6c; 6c'; 6d).

6. A system according to claim 5, wherein said stationary shutter element (15b; 15c; 15c') does not extend axially towards the inside of said internal passage (4) beyond said shutter member (9b; 9c; 9c').

7. A system according to claim 5, wherein said shutter element (15a; 15d) extends axially towards the inside of said internal passage (4) beyond said shutter member (9a; 9d).

8. A system according to any one of claims 4 to 7, wherein said shutter member (9a; 9b; 9c; 9c') includes a stationary portion (8a; 8b; 8c; 8c') that is stationary relative to said retaining member (6a; 6b; 6c; 6c').

9. A system according to any one of claims 1 to 3, wherein said shutter member (9e) is arranged outside said retaining member (6e).

10. A system according to claim 9, wherein said shutter member (9e) forms said main O-ring of said system.

11. A system according to claim 9 or claim 10, wherein, said shutter member (9e), in the shut position, co-operates directly with said retaining member (6e).

12. A system according to any preceding claim, wherein said connector (1) includes a threaded ring (3) for fastening said second end (2') to a threaded outlet from said valve (18) of the compressed air cylinder.

13. A system according to any one of claims 1 to 11, wherein said connector (1) includes a clamp system (30) for fastening said second end (2') to a non-threaded outlet of said valve (18) of the compressed air cylinder.

14. A pressure reducer (A), **characterized in that** it includes a connection system according to any preceding claim.

15. A compressed air cylinder valve (18), **characterized in that** it includes a connection system according to any one of claims 1 to 13.

16. A diving regulator, **characterized in that** it includes a pressure reducer (A) according to claim 14 or a valve (18) according to claim 15.
